# EUROPEAN PATENT SPECIFICATION

(11) **EP 0 575 475 B1**
(45) Date of publication and mention of the grant of the patent: **22.05.1996**
(21) Application number: 92907776.6
(22) Date of filing: 28.02.1992
(51) Int. Cl.: G09G 3/34, G02F 1/01

(54) **ELECTROPHORETIC DISPLAY PANEL WITH PLURAL ELECTRICALLY INDEPENDENT ANODE ELEMENTS**
ELEKTROPHORETISCHE ANZEIGEVORRICHTUNG MIT MEHREREN ELEKTRISCH UNABHAENGIGEN ANODEELEMENTEN
PANNEAU D'AFFICHAGE ELECTROPHORETIQUE POURVU D'UN ENSEMBLE D'ELEMENTS D'ANODE ELECTRIQUEMENT INDEPENDANTS

(30) Priority: 11.03.1991 US 667630
(43) Date of publication of application: 29.12.1993
(73) Proprietor: COPYTELE INC., Huntington Station New York 11746 (US)
(72) Inventor: DISANTO, Frank, J., North Hills, NY 11030 (US); KRUSOS, Denis, A., Lloyd Harbor, NY 11743 (US)
(74) Representative: Lucking, David John
(86) International application number: US9201569
(87) International publication number: WO9215982

(56) References cited:
- US-A- 3 668 106
- US-A- 4 068 927
- US-A- 4 522 472
- US-A- 4 648 956
- US-A- 4 680 103
- US-A- 4 772 820
- PATENT ABSTRACTS OF JAPAN vol. 14, no. 337 (P-1079) (4280) 20 July 1990 & JP-A-02 114 239 (KINSEKI) 26 April 1990

## Description

The present invention relates to electrophoretic display panel apparatus and methods for fabricating same, and more particularly, to a triode-type electrophoretic display panel having an improved anodegrid configuration permitting more efficient electrical connection to display driver circuitry.

A variety of electrophoretic display panels are known. Of most direct pertinence to the present invention are those shown and described in U.S. Patent No. 4,655,897 entitled "Electrophoretic Display Panels and Associated Methods", U.S. Patent No. 4,742,345 entitled "Electrophoretic Display Panel Apparatus and Methods Therefor", and U.S. Patent No. 4,772,820 entitled "Monolithic Flat Panel Display Apparatus". Each of the foregoing U.S. Patents is in the name of Frank J. DiSanto and Denis A. Krusos, the inventors herein, and each is assigned to the assignee herein, Copytele, Inc. The display panels shown in the foregoing patents operate upon the same basic principle, viz., if a suspension of electrically charged pigment particles in a dielectric fluid is subjected to an applied electrostatic field, the pigment particles will migrate through the fluid in response to the electrostatic field. Given a substantially homogeneous suspension of particles having a pigment color different from that of the dielectric fluid, if the applied electrostatic field is localized, it will cause a visually observable localized pigment particle migration. The localized pigment particle migration results either in a localized area of concentration or rarefaction of particles, depending upon the sign and direction of the electrostatic force and the charge on the pigment articles. The electrophoretic display apparatus taught in each of the foregoing U.S. Patents are triode type displays having a plurality of independent, parallel cathode conductor members deposited in the horizontal on one surface of a glass viewing screen. A layer of insulating photoresist material deposited over the cathode members and photoetched down to the cathode members to yield a plurality of insulator strips positioned at right angles to the cathode members, forms the substrate for a plurality of independent, parallel grid conductor members running in the vertical direction. A glass cap member forms a fluid-tight seal with the viewing window along the cap's peripheral edge for containing the fluid suspension and also acts as a substrate for the anode which is a conductor layer deposited on the interior flat surface of the cap. When the cap is in place, the anode surface is in spaced parallel relation to both the cathode members and the grid members. Given a specific particulate suspension, the sign of the electrostatic charge which will attract and repel the pigment particles will be known. The cathode member voltage and the grid member voltage can then be ascertained such that when a particular voltage is applied to the cathode and another voltage is applied to the grid, the area proximate their intersection will assume a net charge sufficient to attract or repel pigment particles in suspension in the dielectric fluid. Since numerous cathode and grid lines are employed, there are numerous discrete intersection points which can be controlled by varying the voltage on the cathode and grid members to cause localized visible regions of pigment concentration and rarefaction. Essentially then, the operating voltages on both cathode and grid must be able to assume at least two states corresponding to a logical one and a logical zero. Logical one for the cathode may either correspond to attraction or repulsion of pigment. Typically, the cathode and grid voltages are selected such that when a given potential difference exists of a given polarity at a given intersection then a sufficient electrostatic field is present at the intersection to cause the writing of a visual bit of information on the display. In this manner, digitized data can be displayed on the electrophoretic display.

The electrophoretic displays described above utilize numerous electrically and physically independent cathode and grid members. For example, an 8-1/2" x 11" display screen with a resolution of 200 lines per inch has 2,200 horizontal cathode row members and 1,700 vertical column grid members. In general, it is desirable to have the greatest number of horizontal and vertical members with the smallest possible width. This results in increased resolution and screen brightness, i.e., the more coordinates, the greater the resolution, the smaller the width of each element, the less the electrophoretic effect is obscured. Thus, the electrophoretic display raises a technical challenge that is common in the field of densely-packed miniaturized electrical devices, viz., while it is possible, using photoetching techniques and the like, to create extremely small circuit components, it is sometimes difficult to make the numerous electrical connections necessary to integrate the miniature components, in this case, the cathode and grid members and the display drivers, into a circuit. A variety of techniques to facilitate connection of miniature components have been developed. For example, U.S. Patent No. 4,772,820 teaches an improved means for connecting numerous miniature cathode and grid members to display drivers. In accordance with that patent, the ends of the cathode and grid members resident upon the surface of the glass viewing screen of the display are metallized and grouped into a pattern which is adapted to electrically connect to mating output contacts of a driver circuit that is bonded to the screen at a predetermined aligned location. The bonding of the respective mating contacts is performed using wire bonding techniques which can be automated to yield quick and efficient connections. In yet a further aspect of the '820 patent the inputs to the driver circuit are also wire bonded to patterned input conductors provided on the surface of the screen thus yielding a substantially monolithic display screen having integral associated driver circuits.

Both U.S. Patent No. 4,742,345 and 4,772,820 utilize a grid comprised of numerous electrically and physically independent vertically-oriented elements which supply the horizontal coordinate (abscissa) for each displayable location. The grid elements in the foregoing patents are spaced away from the cathode elements by an insulation layer. The connector ends and/or the electrical connections made to screen mounted driver circuits are, however, in the same plane as the cathode elements, i.e., deposited upon the surface of the viewing screen. Each grid element, therefore, must have a conductive path from the plane of the grid to the plane of the screen surface which is spaced therefrom by the insulation layer. Further, since both the grid connector/connections and the cathode connectors/connections are disposed on one surface, i.e., around the periphery of the viewing area, this border area is congested.

It is therefore an object of the present invention to provide an electrophoretic display which eliminates a conductor pathway from the plane of the grid to that of the viewing screen, or, in other words, to provide vertical display conductors which may reside in the same plane as their connector ends/connections.

It is a further object to relieve the congestion of circuit components and conductor pathways around the periphery of the display area of an electrophoretic display screen.

It is yet another object to provide an electrophoretic display which is easier and more economical to produce by simplifying the connection of the numerous vertical display elements to their respective driver circuits.

The problems and disadvantages associated with conventional electrophoretic displays are overcome by the present invention as defined in claim 1 which includes a fluid-tight envelope having a portion thereof which is at least partially transparent for containing an electrophoretic fluid. The fluid has pigmented particles suspended therein. The envelope further contains a plurality of elongated substantially parallel horizontal conductor members disposed within a first plane, as well as a plurality of elongated substantially parallel vertical conductor members electrically insulated from the horizontal members and disposed within a second plane. The first and second planes are substantially parallel and the horizontal members and vertical members form a matrix with a plurality of intersections when viewed along a line perpendicular to the first and second planes. A grid which is substantially electrically equipotential at all points thereof is interposed between and electrically insulated from the horizontal and vertical members. The grid has a plurality of pores therein capable of admitting the fluid. The horizontal and vertical members each are selectively electrically chargeable to induce movement of the particles within the fluid, the particles being at least partially visible through the transparent portion of the envelope.

For a better understanding of the present invention, reference is made to the following detailed description of an exemplary embodiment considered in conjunction with the accompanying drawings, in which:

FIG. 1 is a diagrammatic plan view of the interior surface of a triode-type electrophoretic display panel faceplate, which, when assembled to constitute a fluid containing envelope, would be interior to the envelope, and which is in accordance with an exemplary embodiment of the present invention.

FIG. 2 is a diagrammatic plan view of the interior surface of a triode-type electrophoretic display panel backplate, which, when assembled to constitute a fluid containing envelope, would be interior to the envelope, and which is in accordance with an exemplary embodiment of the present invention.

FIG. 3 is a cross-sectional view of an electrophoretic display panel assembled into a fluid containing envelope using the faceplate of FIG. 1 and the backplate of FIG. 2 assembled to an interposed sealing wall.

FIG. 4 is an exemplary line-by-line sequence of voltage state sets for a hypothetical 3 cathode element X 3 anode element electrophoretic display constructed in accordance with the present invention as shown in FIGS. 1, 2 and 3, each line listing in the first column the observable effect on the display resulting from the set of voltage states listed in the subsequent columns of that line.

FIG. 5 is a diagrammatic depiction of a screen output image resulting from the sequential assumption of the voltage state sets of FIG. 4, assuming the same hypothetical 3 X 3 display as was assumed with respect to FIG. 4.

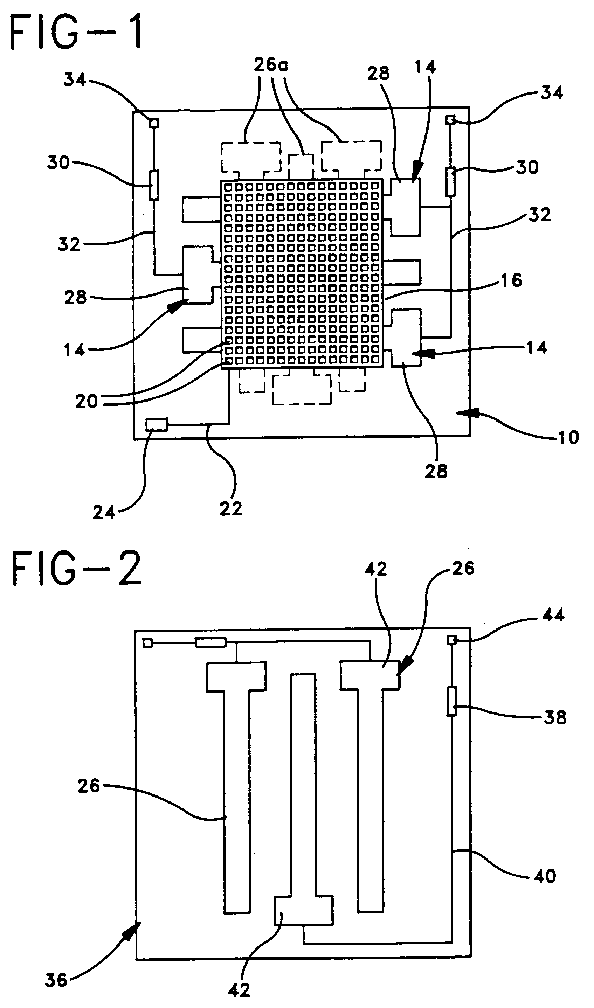

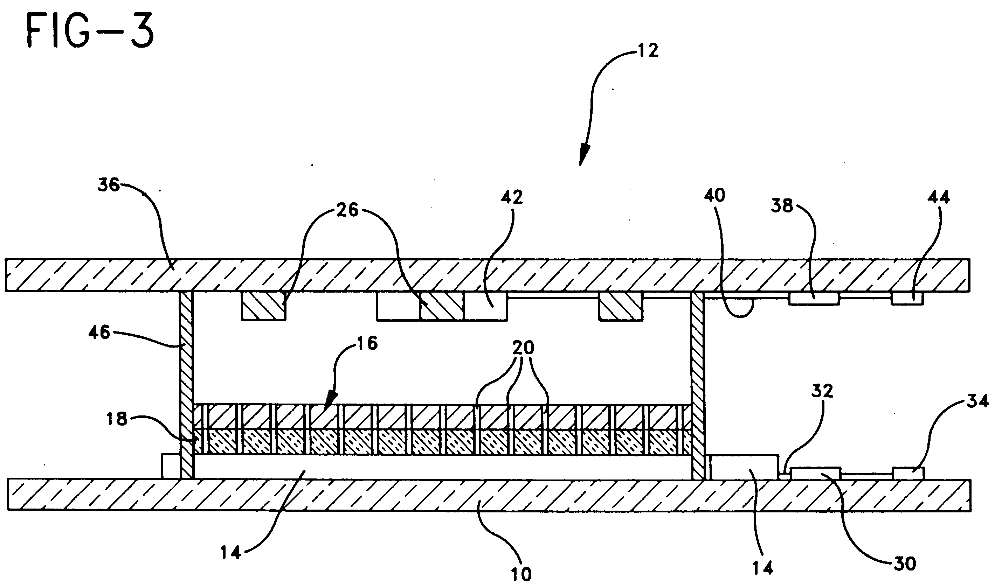

FIG. 1 shows the rear or interior side of a faceplate 10 of an electrophoretic display panel 12 (see FIG. 3) in accordance with the present invention. The anode conductors which are shown in FIG. 2 on the backplate are shown dashed in FIG. 1. The faceplate 10 is typically formed from glass and serves as a substrate upon which is deposited a plurality of independent, electrically conductive cathode members 14 (horizontal rows) using conventional deposition and etching techniques. It is preferred that the cathode members 14 be composed of Indium-Tin-Oxide (ITO) as set forth in U.S. Patent No. 4,742,345, which is incorporated herein by reference, and which teaches an exemplary method for forming the cathode members 14. A grid 16 is superposed over the cathode members 14 and is insulated therefrom by an interstitial photoresist layer 18 (see FIG. 3). The grid 16 is an electrically equipotential element, i.e., the entire grid is in electrical continuity. The grid 16 may be formed by coating the photoresist layer 18 with a metal, such as nickel, using sputtering techniques, or the like, and then selectively masking and etching a plurality of pores 20 through the metal layer, or by depositing a plurality of grid lines in one direction then overlaying in electrically conductive association therewith another set of grid lines perpendicular thereto. Whichever method is employed, the resultant grid 16 preferably has a pore size of approximately 10 µm, a pore center-to-center spacing of about 20 µm and a grid thickness of approximately 3000Å. The grid 16 is provided with a single conductor pathway 22 leading therefrom to a terminal 24 for receiving a voltage source. Consequently, the entire grid 16 is maintained at a single electrical potential across its entire area during operation of the display. This is in contrast to the previous grid structures which were comprised of discrete elements that could assume a variety of voltages during operation corresponding to the display operations of erase, hold and write. The present invention utilizes electrically and physically discrete anode elements 26 (see FIG. 2) to supply the horizontal coordinate (abscissa) specifying where display operations occur in place of the discrete grid elements previously used. The assembled position of the anode elements 26a with respect to the grid 16 and the cathode elements 14 is depicted in FIG. 1 in dashed lines. As in previous displays, e.g., see U.S. Patent No. 4,742,345, each cathode member 14 terminates at one end in a contact pad 28 which is merely an enlargement of the element facilitating connection to display driver circuitry 30. Of course, if the connections 32 are, e.g., printed in the same operation as the cathode elements 14, contact pads 28 would not be necessary. The same comments apply to the anode elements 26, discussed further below. In the embodiment shown, a representative row driver circuit 30 is bonded to the faceplate 10 in accordance with the teachings of U.S. Patent No. 4,772,820, which is incorporated herein by reference. An actual display would utilize numerous such circuits as described in U.S. Patent No. 4,772,820. the number of cathode members 14 shown, i.e., three, is also, of course, greatly reduced for ease of illustration, as actual displays would have in the order of 2,200 such cathode members 14. An input terminal 34 is shown connected to each driver circuit 30 for purposes of illustration. More verisimilar illustrations depicting the number and arrangement of such input terminals 34 can be seen in U.S. Patent No. 4,772,820.

FIG. 2 shows the front or interior side of a backplate 36 of an electrophoretic display panel 12 (see FIG. 3) in accordance with the present invention. The back plate 36 is preferably formed from glass and serves as a substrate upon which is deposited a plurality of independent electrically conductive anode members 26 (vertical columns). It is preferred that the anode members 26 be formed from a metal such as chrome. Besides the fact that they drive the anode members 26, rather than the cathode members 14, the anode display driver circuits 38, connections 40 from the anode element contact pads 42 to the circuits 38, and anode input terminals 44 have the same form and function as the corresponding elements connected to the cathode members 14 and described in reference to FIG. 1. It should be noted that the anode members 26, their contact pads 42, and any connections to anode driver circuits 40, as well as the anode driver circuits 38 and anode input terminals 44, all reside on the surface of the backplate 36. This configuration does not require multiple electrical connections to be formed between elements residing in different planes. Thus, by utilizing the anode members 26 in place of discrete grid members to establish the abscissa of a display coordinate pair, the undesirable connections between two planes are eliminated. Further, since the vertical anode members 26 and their connections and driver circuitry are located on the backplate 36 instead of the faceplate 10, congestion around the periphery of the faceplate is reduced by approximately one half.

FIG. 3 shows the faceplate 10 and backplate 36 of FIGS. 1 and 2 sealably assembled to a peripheral sealing wall 46 to form an envelope for containing a dielectric fluid/pigment particle suspension (not shown). The faceplate 10, backplate 36 and wall 46 are sealably joined by gluing, heat sealing or any other conventional method for forming sealed glass envelopes. It should be observed that the pores 20 of the grid 16 extend through the grid 16 and also through the insulating photoresist layer 18, so that the electrophoretic fluid is in contact with the cathode members 14 via the pores 20. The extension of the pores 20 through the photoresist layer 18 can be formed through the conventional processes and techniques described in U.S. Patent Nos. 4,742,345. The dimensions of the cathode members 14, insulating layer 18, grid 16, and anode members 26 are all greatly exaggerated to facilitate illustration. In actuality the cathode members preferably are approximately 1200Å thick, the grid 16, approximately 500Å thick and the anode members 26, approximately 3000Å thick. Thus, by applying voltages to the cathode members 14, grid 16 and anode members 26, suspended pigment particles in the dielectric fluid can be made to accumulate near, or disperse from, the intersections of selected cathode and anode members to translate these voltages into a visible display. These features with the exception of the respective function of the grid 16 and the anode elements 26, are in accordance with U.S. Patent No. 4,742,345 which patent may be relied upon to supply further details of assembly and function of the display 12.

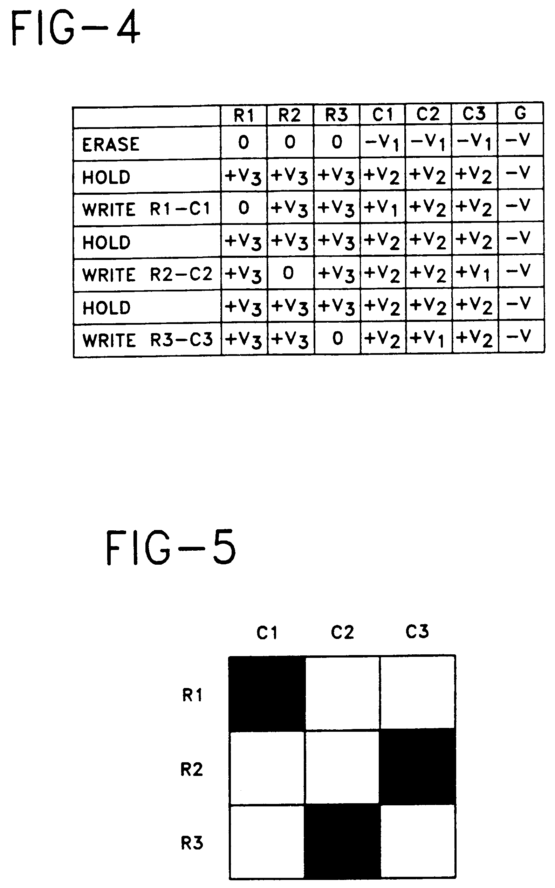

Referring now to FIG. 4, a table of voltages to be applied to a hypothetical 3X3 display is shown. Each line shows the effect upon the display of a certain combination of voltages applied the 3 cathode members (R1, R2, R3) and the 3 anode members (C1, C2, C3). It should be noted that the grid voltage is held constant in all voltage sets. The voltages, V1, V2, and V3 are a function of the amount of spacing from the anode elements 26 to the grid 16 and cathode elements 14. This spacing is chosen to minimize speading of the electrostatic field between such elements at display points, such speading resulting in a reduced resolution. Assuming a 3 mm spacing between frontplate 10 and backplate 36, appropriate voltage levels would be approximately as follows: V1 = 50 V, V2 = 18 V, and V3 = 10 V. The grid 16 would be maintained at approximately -4 V.

FIG. 5 illustrates the visual effect on a hypothetical 3X3 display achieved by applying the sequence of voltage sets shown in the table of FIG. 4 to a hypothetical 3X3 display constructed in accordance with the present invention, the darkened blocks representing a display bit in the written or "ON" state.

It should be understood that the embodiments described herein are merely exemplary and that a person skilled in the art may make many variations and modifications without departing from the scope of the invention as defined in the appended claims.

## Claims

1. An electrophoretic display apparatus (12) comprising:
(a) a fluid tight envelope having a portion (10) thereof which is at least partially transparent;
(h) an electrophoretic fluid contained within said envelope, said electrophoretic fluid having pigmented particles suspended therein;
(c) said envelope further containing therein a plurality of elongated substantially parallel horizontal conductor members (14) disposed within a first plane;
(d) a plurality of elongated substantially parallel vertical conductor members (26) electrically insulated from said horizontal conductor members (14) and disposed within a second plane, said first and second planes being substantially parallel, said horizontal and vertical conductor members (14,26) forming a matrix with a plurality of intersections when viewed along a line perpendicular to said first and second planes; and
(e) a continuous electrically conductive grid (16) such that all points thereof have equipotential, the grid (16) being fixedly interposed between and electrically insulated from said horizontal and said vertical conductor members (14,26), said grid (16) having a plurality of pores (20) capable of admitting said electrophoretic fluid therein, said grid (16), said horizontal conductor members (14) and said vertical conductor members (26) being selectively electrically chargeable to induce movement of said particles within said electrophoretic fluid, said particles being at least partially visible through said at least partially transparent portion (10) of said envelope.

2. The device of Claim 1, wherein said envelope includes a substantially flat faceplate (10), a central portion of which is said at least partially transparent portion of said envelope, said faceplate (10) forming a substrate supporting said horizontal conductor members (14) within said first plane.

3. The device of Claim 2, wherein said envelope includes a backplate (36), said backplate (36) forming a substrate supporting said vertical conductor members (26) within said second plane.

4. The device of Claim 3 further including a layer of insulator material (18) overlying said horizontal conductor members (14), said grid (16) being deposited upon said layer of insulator material (18) distal to said horizontal conductor members (14).

5. The device of Claim 4, wherein said layer of insulator material (18) is penetrated by a plurality of bores which permit said electrophoretic fluid to contact said horizontal conductor members (14).

6. The device of Claim 5, wherein said bores at least partially communicate with said pores (20) of said grid such that said fluid can flow through said pores (20) and into said bores.

7. The device of Claim 6, wherein said electrophoretic display is a triode-type device, said horizontal conductor members (14) constituting a cathode, said grid (16) being a grid of said triode and said vertical conductor members (26) constituting an anode of said triode.

8. The device of Claim 7, further including a side wall (46) interposed between and sealably affixed to said faceplate (10) and said backplate (36) to form said fluid tight envelope.

9. The device of Claim 8, wherein said faceplate (10) is glass, and said horizontal conductor members (14) are composed of Indium-Tin-Oxide.

10. The device of Claim 9, wherein said backplate (36) is glass and said vertical conductor members (26) are at least partially composed of chrome.

11. The device of Claim 6, wherein each of said plurality of elongated substantially parallel horizontal members (14) and each of said plurality of elongated substantially parallel vertical conductor members (26) have an end for electrically connecting to an associated voltage source and a free end.

12. The device of Claim 11, wherein said ends for electrically connecting and said free ends of succeeding said horizontal conductor members (14) are positioned in proximity to one another on said faceplate (10) surface.

13. The device of Claim 12, wherein said ends for electrically connecting and said free ends of succeeding said vertical conductor members (26) are positioned in proximity to one another on said backplate (36) surface.

14. The device of Claim 11, further including at least one row display driver circuit (30) affixed to said faceplate (10) and electrically connected by electrical connections (32) to said horizontal conductor members (14).

15. The device of Claim 14, further including at least one column display driver circuit (38) affixed to said backplate (36) and electrically connected by electrical connections (40) to said vertical conductor members (26).

16. The device of Claim 15, wherein said horizontal conductor members (14), said at least one row display driver circuit (30) and said electrical connections (32) therebetween all reside substantially in said first plane.

17. The device of Claim 16, wherein said vertical conductor members (26), said at least one column display driver circuit (38), and said electrical connections (40) therebetween all reside substantially in said second plane.

18. The device of Claim 17, further including input terminals (34) disposed on said faceplate (10) in said first plane for said at least one row display driver circuit (30).

19. The device of Claim 18, further including input terminals (44) disposed on said backplate (36) in said second plane for said at least one column display driver circuit (38).

## Patentansprüche

1. Eine elektrophoretische Anzeigevorrichtung (12) mit:
(a) einer fluiddichten Umhüllung, deren einer Abschnitt (10) wenigstens teilweise transparent ist;
(b) einem elektrophoretischen Fluid, das von der Umhüllung aufgenommen wird, wobei das elektrophoretische Fluid pigmentierte Partikel hat, die in diesem verteilt sind;
(c) wobei die Umhüllung weiter eine Vielzahl von länglichen, im wesentlichen parallelen horizontalen Leiterelementen (14) aufweist, die in einer ersten Ebene angeordnet sind (14);
(d) einer Mehrzahl von länglichen, im wesentlichen parallelen, vertikal verlaufenden Leiterelementen (26), die elektrisch von dem horizontalen Leiterelementen (14) isoliert und in einer zweiten Ebene verteilt sind, wobei die erste und die zweite Ebene im wesentlichen parallel zueinander liegen, die horizontalen und vertikalen Leiterelemente (14, 26) eine Matrix mit einer Mehrzahl von Zwischenabschnitten bilden, gesehen entlang einer Linie senkrecht zu der ersten und zu der zweiten Ebene; und
(e) einem kontinuierlichen, elektrisch leitfähigen Gitter (16) derart, daß alle deren Punkte das gleiche Potential haben, wobei das Gitter (16) fest zwischen den horizontalen und den vertikalen Leiterelementen (14, 16) angeordnet und von diesen elektrisch isoliert ist, das Gitter (16) eine Vielzahl von Poren (20) hat, die dazu in der Lage sind, das elektrophoretische Fluid in sich aufzunehmen, das Gitter (16), die horizontalen Leiterelemente (14) und die vertikalen Leiterelemente (16) wahlweise elektrisch geladen werden können, um eine Bewegung in den Partikeln innerhalb des elektrophoretischen Fluids zu bewirken, wobei die Partikel wenigstens teilweise durch den wenigstens teilweise transparenten Abschnitt (10) der Umhüllung sichtbar sind.

2. Die Vorrichtung nach Anspruch 1, wobei die Umhüllung eine im wesentlichen flache Sichtplatte (10) hat, deren Zentralabschnitt der wenigstens teilweise transparente Abschnitt der Umhüllung ist, wobei die Sichtplatte (10) ein Substrat bildet, das die horizontalen Leiterelemente (14) in der ersten Ebene trägt.

3. Die Vorrichtung von Anspruch 2, wobei die Umhüllung eine Rückplatte (36) aufweist, die einen Träger bildet, der die vertikalen Leiterelemente (26) in der zweiten Ebene trägt.

4. Die Vorrichtung von Anspruch 3, weiter mit einer Schicht aus einem Isolationsmaterial (18), das die horizontalen Leiterelemente (14) überlappt, wobei das Gitter (16) auf der Schicht aus dem Isolationsmaterial (18) entfernt von den horizontalen Leiterelementen (14) aufgebracht ist.

5. Die Vorrichtung von Anspruch 4, wobei die Schicht aus dem Isolationsmaterial (18) von einer Mehrzahl von Bohrungen durchdrungen ist, die es dem elektrophoretischen Fluid erlauben, die horizontalen Leiterelemente (14) zu kontaktieren.

6. Die Vorrichtung von Anspruch 5, wobei die Bohrungen wenigstens teilweise mit den Poren (22) derart kommunizieren, daß das Fluid durch die Poren (20) und in den Bohrungen strömen kann.

7. Die Vorrichtung von Anspruch 6, wobei die elektrophoretische Anzeige vom Triode-Typ ist, bei der die horizontalen Leiterelemente (14) eine Kathode bilden, das Gitter (16) ein Gatter der Triode ist und die vertikalen Leiterelemente (26) eine Anode der Triode bilden.

8. Die Vorrichtung von Anspruch 7 weiter mit einer Seitenwandung (46), die zwischen der Sichtplatte (10) und der Rückplatte (36) angeordnet und mit diesen abdichtend verbunden ist, um die fluiddichte Umhüllung zu schaffen.

9. Die Vorrichtung von Anspruch 8, wobei die Sichtplatten (10) aus Glas ist und die horizontalen Leiterelemente (14) aus Indium-Tin-Oxide gebildet sind.

10. Die Vorrichtung von Anspruch 9, wobei die Rückplatte (36) Glas ist und die vertikalen Leiterelemente (26) wenigstens teilweise aus Chrom gebildet sind.

11. Die Vorrichtung nach Anspruch 6, wobei jedes aus der Mehrzahl von länglichen, im wesentlichen parallelen horizontalen Elementen (14) und jedes aus der Mehrzahl von länglichen, im wesentlichen parallelen vertikalen Leiterelementen (26) ein Ende für eine elektrische Verbindung mit einer zugehörigen Spannungsquelle und ein freies Ende haben.

12. Die Vorrichtung von Anspruch 11, wobei die zur elektrischen Verbindung dienenden Enden und die freien Enden von aufeinanderfolgenden der horizontalen Leiterelemente (14) in Nähe zueinander auf der Oberfläche der Sichtplatte (10) positioniert sind.

13. Die Vorrichtung von Anspruch 12, wobei die zur elektrischen Verbindung dienenden Enden und die freien Enden benachbarter der vertikalen Leiterelemente (26) in Nähe zueinander auf der Oberfläche der Rückplatte (36) positioniert sind.

14. Die Vorrichtung von Anspruch 11, weiter mit wenigstens einem auf der Sichtplatte (10) befestigen und elektrisch durch elektrische Verbinder (32) mit den horizontalen Leiterelementen (14) verbundenen Reihenanzeigetreiberschaltung (30).

15. Die Vorrichtung nach Anspruch 14, weiter mit wenigstens einer an der Rückplatte (36) befestigten und elektrisch über elektrische Verbinder (40) mit den vertikalen Leiterelementen (26) verbundenen Säulenanzeigetreiberschaltung (38).

16. Die Vorrichtung von Anspruch 15, wobei die horizontalen Leiterelemente (14), die wenigstens eine Reihenanzeigetreiberschaltung (30) und die elektrischen Verbinder (32) dazwischen alle im wesentlichen in der ersten Ebene ruhen.

17. Die Vorrichtung von Anspruch 16, wobei die vertikalen Leiterelemente (26), die wenigstens eine Säulenanzeigetreiberschaltung (38) und die elektrischen Verbinder (40) dazwischen alle im wesentlichen in der zweiten Ebene ruhen.

18. Die Vorrichtung von Anspruch 17, weiter mit Eingangsanschlüssen (34), die auf der Lichtplatte (10) in der ersten Ebene für die wenigstens einen Reihenanzeigetreiberschaltung (30) angeordnet sind.

19. Die Vorrichtung von Anspruch 18, weiter mit Eingangsanschlüssen (44), die auf der Rückplatte (36) in der zweiten Ebene für die wenigstens eine Säulenanzeigetreiberschaltung (38) angeordnet sind.

## Revendications

1. Un appareil d'affichage électrophorétique (12) comprenant :
(a) une enveloppe étanche à du fluide ayant une partie (10) qui est au moins partiellement transparente ;
(b) un fluide électrophorétique contenu dans ladite enveloppe, ledit fluide électrophorétique ayant des particules pigmentées suspendues dans celui-ci ;
(c) ladite enveloppe contenant en outre une pluralité d'éléments conducteurs horizontaux sensiblement parallèles allongés (14) disposés dans un premier plan ;
(d) une pluralité d'éléments conducteurs verticaux sensiblement parallèles allongés (26), isolés électriquement desdits éléments conducteurs horizontaux (14) et disposés dans un second plan, lesdits premier et second plans étant sensiblement parallèles, lesdits éléments conducteurs horizontaux et verticaux (14, 26) formant une matrice avec une pluralité d'intersections lorsqu'ils sont vus le long d'une ligne perpendiculaire auxdits premier et second plans ; et
(e) une grille continue électriquement conductrice (16) de sorte que tous les points de celle-ci soient équipotentiels, la grille (16) étant interposée de façon fixe entre lesdits et électriquement isolée desdits éléments conducteurs horizontaux et verticaux (14, 26), ladite grille (16) ayant une pluralité de pores (20) capables de recevoir ledit fluide électrophorétique dans ceux-ci, ladite grille (16), lesdits éléments conducteurs horizontaux (14) et lesdits éléments conducteurs verticaux (26) pouvant être sélectivement chargés électriquement pour induire un mouvement desdites particules dans ledit fluide électrophorétique, lesdites particules étant au moins partiellement visibles à travers ladite partie au moins partiellement transparente (10) de ladite enveloppe.

2. Le dispositif de la Revendication 1, dans lequel ladite enveloppe inclut une plaque avant sensiblement plate (10), dont une partie centrale est ladite partie au moins partiellement transparente de ladite enveloppe, ladite plaque avant (10) formant un substrat supportant lesdits éléments conducteurs horizontaux (14) dans ledit premier plan.

3. Le dispositif de la Revendication 2, dans lequel ladite enveloppe inclut une plaque arrière (36), ladite plaque arrière (36) formant un substrat supportant lesdits éléments conducteurs verticaux (26) dans ledit second plan.

4. Le dispositif de la Revendication 3 incluant en outre une couche de matériau isolant (18) recouvrant lesdits éléments conducteurs horizontaux (14), ladite grille (16) étant déposée sur ladite couche de matériau isolant (18) distale auxdits éléments conducteurs horizontaux (14).

5. Le dispositif de la Revendication 4, dans lequel ladite couche de matériau isolant (18) est pénétrée par une pluralité de trous qui permettent audit fluide électrophorétique d'être en contact avec lesdits éléments conducteurs horizontaux (14).

6. Le dispositif de la Revendication 5, dans lequel lesdits trous communiquent au moins partiellement avec lesdits pores (20) de ladite grille de sorte que ledit fluide puisse couler à travers lesdits pores (20) et dans lesdits trous.

7. Le dispositif de la Revendication 6, dans lequel l'affichage électrophorétique est un dispositif de type triode, lesdits éléments conducteurs horizontaux (14) constituant une cathode, ladite grille (16) étant une grille de ladite triode et lesdits éléments conducteurs verticaux (26) constituant une anode de ladite triode.

8. Le dispositif de la Revendication 7, incluant en outre une paroi latérale (46) interposée et fixée de façon étanche entre ladite plaque avant (10) et ladite plaque arrière (36) pour former ladite enveloppe étanche à du fluide.

9. Le dispositif de la Revendication 8, dans lequel ladite plaque avant (10) est du verre, et lesdits éléments conducteurs horizontaux (14) sont conçus en Oxyde d'Indium-Etain.

10. Le dispositif de la Revendication 9, dans lequel ladite plaque arrière (36) est du verre et lesdits éléments conducteurs verticaux (26) sont au moins partiellement composés de chrome.

11. Le dispositif de la Revendication 6, dans lequel chacun de ladite pluralité d'éléments horizontaux sensiblement parallèles allongés (14) et chacun de ladite pluralité d'éléments conducteurs verticaux sensiblement parallèles allongés (26) ont une extrémité pour se connecter électriquement à une source de tension associée et une extrémité libre.

12. Le dispositif de la Revendication 11, dans lequel lesdites extrémités pour se connecter électriquement et lesdites extrémités libres desdits éléments conducteurs horizontaux (14) successifs sont positionnées à proximité l'une de l'autre sur une surface de ladite plaque avant (10).

13. Le dispositif de la Revendication 12, dans lequel lesdites extrémités pour se connecter électriquement et lesdites extrémités libres desdits éléments conducteurs verticaux (26) successifs sont positionnées à proximité l'une de l'autre sur une surface de ladite plaque arrière (36).

14. Le dispositif de la Revendication 11, incluant en outre un circuit de commande d'affichage d'au moins une rangée (30) fixé à ladite plaque avant (10) et connecté électriquement par des connexions électriques (32) auxdits éléments conducteurs horizontaux (14).

15. Le dispositif de la Revendication 14, incluant en outre un circuit de commande d'affichage d'au moins une colonne (38) fixé à ladite plaque arrière (36) et connecté électriquement par des connexions électriques (40) auxdits éléments conducteurs verticaux (26).

16. Le dispositif de la Revendication 15, dans lequel lesdits éléments conducteurs horizontaux (14), ledit circuit de commande d'affichage d'au moins une rangée (30) et lesdites connexions électriques (32) entre ceux-ci reposent tous sensiblement dans ledit premier plan.

17. Le dispositif de la Revendication 16, dans lequel lesdits éléments conducteurs verticaux (26), ledit circuit de commande d'affichage d'au moins une colonne (38), et lesdites connexions électriques (40) entre ceux-ci reposent tous sensiblement dans ledit second plan.

18. Le dispositif de la Revendication 17, incluant en outre des bornes d'entrée (34) disposées sur ladite plaque avant (10) dans ledit premier plan pour ledit circuit de commande d'affichage d'au moins une rangée (30).

19. Le dispositif de la Revendication 18, incluant en outre des bornes d'entrée (44) disposées sur ladite plaque arrière (36) dans ledit second plan pour ledit circuit de commande d'affichage d'au moins une colonne (38).
